Europäisches Patentamt

European Patent Office

Office européen des brevets

(11) Veröffentlichungsnummer: **0 417 435 A2**

# (12) EUROPÄISCHE PATENTANMELDUNG

(21) Anmeldenummer: 90114135.8

(22) Anmeldetag: 24.07.90

(51) Int. Cl.5: **C04B 41/85**

(30) Priorität: 15.09.89 DE 3930866

(43) Veröffentlichungstag der Anmeldung:
20.03.91 Patentblatt 91/12

(84) Benannte Vertragsstaaten:
AT BE CH DE DK ES FR GB GR IT LI LU NL SE

(71) Anmelder: **DIDIER-WERKE AG**
**Lessingstrasse 16-18**
**W-6200 Wiesbaden(DE)**

(72) Erfinder: **Lührsen, Ernst**
**Danziger Strasse 5**
**W-6208 Bad Schwalbach(DE)**
Erfinder: **Schuler, Andreas**
**Silberbachstrasse 3a**
**W-6204 Taunusstein-Wehen(DE)**
Erfinder: **Hintzen, Ullrich**
**Lahnstrasse 20**
**W-6204 Taunusstein-Watzhahn(DE)**

(74) Vertreter: **Brückner, Raimund, Dipl.-Ing.**
**c/o Didier-Werke AG Lessingstrasse 16-18**
**W-6200 Wiesbaden(DE)**

(54) Feuerfeste kohlenstoffhaltige Formkörper.

(57) Bei feuerfesten kohlenstoffhaltigen Formkörpern soll einer verschleißfördernden Entkohlung dadurch vorgebeugt werden, daß eine durch Tränkung des Körpers (1 bzw. 2) in einem Tränkungsmittel auf Borbasis erzeugte Schutzschicht (7 bzw. 8) vorgesehen ist.

EP 0 417 435 A2

## FEUERFESTE KOHLENSTOFFHALTIGE FORMKÖRPER

Die Erfindung betrifft feuerfeste kohlenstoffhaltige Formkörper, die in Luftatmosphäre thermochemischen Angriffen ausgesetzt sind, insbesondere Verschleißkörper wie Platten und Hülsen für Schieberverschlüsse an metallurgischen Gefäßen.

Der Begriff feuerfeste kohlenstoffhaltige Formkörper umfaßt alle Formkörper, die neben üblichen feuerfesten Materialien Kohlenstoff aufweisen, beispielsweise als Materialfraktion, als Bestandteil eines Bindemittels oder Tränkungsmittels. In allen Fällen findet unter Betriebsbedingungen in luft- bzw. oxidierender Atmosphäre durch Ausbrennen des Kohlenstoffes eine Gefügeentkohlung statt, die von außen nach innen fortschreitend bei etwa 400° C beginnt und bei 600° C stark ausgeprägt ist. In den entkohlten Poren entsteht durch Luftzutritt ein vergleichsweise hoher Partialdruck des Sauerstoffes, der durch Diffusion immer wieder an noch vorhandenen Kohlenstoff herangeführt wird und dessen Ausbrand fortsetzt. Dadurch bildet sich eine von außen nach innen stetig wachsende Schicht erhöhter Porosität, mit deren Anwachsen die Festigkeit und Beständigkeit eines Formkörpers rasch abnehmen, was schließlich zu dessen vorzeitiger Zerstörung führt. Zur Beschleunigung dieses Zerstörunsprozesses trägt Metallschmelze, vornehmlich Stahlschmelze bei, die an beruhrten Formkörperstellen durch chemische und/oder abrasive Angriffe Materialkörner aus dem Verband herauslöst.

Hautpsächlich um den besagten chemischen und abrasiven Angriffen zu begegnen, wurde die Tränkung mit Teer bei gebrannten Formkörpern eingeführt, die beispielsweise in Verschlüssen am Ausguß metallurgischer Gefäße als austauschbare Verschleißkörper zur Anwendung kommen. Davon ist der Einsatz teergetränkter Platten und Hülsen in Schieberverschlüssen problematisch, weil die bei Betriebswärme aus den Formkörpern austretenden Teerdämpfe auf die Umgebung belästigend wirken und die Schieberverschlußapparaturen stark verschmutzen.

Deswegen ist in der DE 39 21 794.9 (PA 3836) bereits vorgeschlagen worden, Schieberverschluß-Platten und Hülsen außerhalb der durch Schmelze verschleißgefährdeten Stellen, wenigstens an den an die Außenluft angrenzenden Oberflächenbereichen eine hitzebeständige und gasdichte Siegelschicht vorzusehen, um ein Abwandern von Teerdämpfen in die Außenluft zu verhindern.

Vorliegender Erfindung liegt die Aufgabe zugrunde, kohlenstoffhaltige Formkörper vor Entkohlung mit einfachen Mitteln zu schützen und damit deren Lebensdauer zu erhöhen, unter gleichzeitiger Vermeidung von bei Verschleißkörpern insbesondere in Schieberverschlüssen vorkommenden schädlichen Teeremissionen.

Die gestellte Aufgabe wird gemäß der Erfindung im wesentlichen dadurch gelöst, daß eine die Poren gegen Entkohlung abdichtende, durch Tränkung des Formkörpers in einem Tränkungsmittel auf Borbasis erzeugte Schutzschicht vorgesehen ist. Dadurch entsteht ein Formkörper mit besonders gut abgedichteten, den Zutritt von Außenluft weitgehend absperrenden Poren. Schon beim Trocknungsvorgang des zweckmäßig mit einer Boratlösung voll durchtränkten Formkörpers wandert Bor mit Kristallwasser nach außen und bildet so einen gasundurchlässigen Oberflächenschutz. Dabei erhöht sich der Schutzeffekt durch Glasbildung aus der Boratlösung bei vergleichweise niedrigen Temperaturen ab etwa 400° C, so daß eine zerstörende Entkohlung des Formkörpers an den im Betrieb über 400° C heiß werdenden Stellen in Luftatmosphäre nicht stattfinden kann.

Dies ist besonders wichtig für die Lebensdauer und das Emissionsverhalten von teergetränkten Platten und Hülsen an Schieberverschlüssen. Derartige Körper sind in allen Körperbereichen mit über 400° C belastet und so der Entkohlung voll ausgesetzt. Trotz wiederholt aufeinander folgendem Tränken, gegebenenfalls unter Vakuum und anschließendem Tempern des Formkörpers gelingt es nicht den Ausbrand von Kohlenstoff zu stoppen. Teer dringt nicht in feinere Poren ein, durch die hindurch Luftatmosphäre nachfolgt. Erst durch Tränkung mit einer sehr viel dünnflüssigeren Boratlösung erfolgt eine befriedigende Abdichtung hinsichtlich des Zuganges von Luft.

Um andererseits die verschleißmindernde Wirkung von Teerdämpfen an den Flächen zu nutzen, an denen ein teerhaltiger Formkörper wahrend des Betriebes, beispielsweise mit Stahlschmelze Kontakt hat, schlägt die Erfindung vor, solche potentielle Stellen vor der Boratlösung mit einer Schicht, vorzugsweise aus Lack zu versehen, welche die Boratlösung abweist und bei Betriebstemperatur aufgelöst wird. Mithin entweicht beim Einsatz beispielsweise einer teergetränkten Schieberplatte aller Teer nur an boratfreien Stellen, um zerstörenden Angriffen von Schmelze entgegenzuwirken. Auf diese Weise ist eine effektive Ausnutzung des in einem Formkörper enthaltenen Teers an gezielt anvisierten Stellen erreichbar, bei gleichzeitiger teerundurchlässiger und entkohlungssicherer Abdichtung der übrigen Oberflächenbereiche.

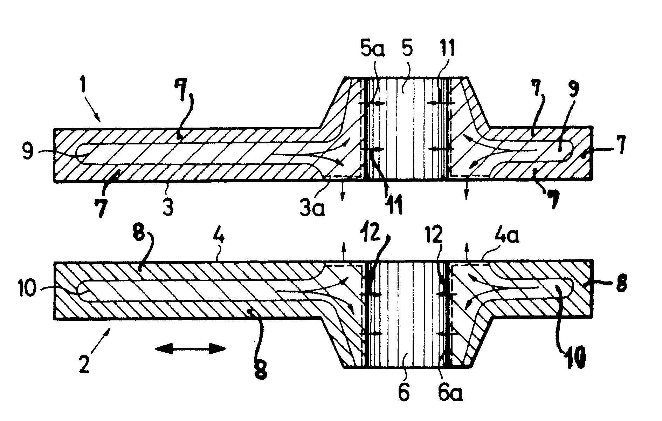

Die Erfindung ist nachstehend anhand der Zeichnung erläutert, die ein teergetränktes Plattenpaar für Schieberverschlüsse im Längsschnitt veranschaulicht.

In der Zeichnung bedeutet 1 eine ortsfeste Bodenplatte und 2 eine verstellbare Schieberplatte, die als Verschleißkörper in einem der Einfachheit halber nicht dargestellten Schieberverschluß austauschbar angeordnet sind. Beide Platten 1 und 2 liegen an den Gleitflächen 3 und 4 derart dichtend aneinander, daß die Schieberplatte 2 aus der gezeigten Offenstellung, in der die Durchflußöffnungen 5 und 6 der Platten 1 und 2 deckungsgleich sind, in eine Drosselstellung oder in Schließstellung gebracht werden kann.

Die Platten 1 und 2 sind nach üblicher Teertränkung und anschließender Temperung gemäß der Erfindung an den durch die Schmelze gefährdeten, in der Zeichnung gestrichelt eingezeichneten Stellen mit bei Betriebswärme verflüchtigendem Lack bestrichen bzw. besprüht. Es handelt dabei um die Wandungen 5a und 6a der Durchflußöffnungen 5 und 6 sowie um daran angrenzende Ringbereiche 3a und 4a der Gleitflächen 3 und 4, die von der danach durchgeführten vollen Durchtränkung der Platten 1 und 2 in einer Boratlösung ausgespart bleiben. Der Borattränkung schließt sich eine Trocknung bei etwa 100° C an. Hierbei evakuiert Borat nach außen in Richtung Oberfläche der Platten 1 und 2, und bildet dort eine besonders dichte engschraffierte Entkohlungsschutzschicht 7 und 8, unter gleichzeitigem Entstehen eines inneren teerdurchlässigen Plattenkerns 9 und 10. Dieser Vorgang setzt sich nach Einbau der Platten 1 und 2 in einen Schieberverschluß mit zunehmender Betriebswärme fort, so daß nach Auflösen des Lackanstriches bei etwa 400° C im Kern 9 bzw. 10 aufkommende

Teerdämpfe an den Stellen 3a, 5a bzw. 4a, 6a der Platten 1 und 2 gemäß den eingezeichneten Pfeilen 11 bzw. 12 zielgerecht austreten und damit unter Schmierwirkung an den Gleitflächen 3 und 4 die Standzeit der Platten 1 und 2 erhöhen. Gleichartig kann bei Ein- und Auslaufhülsen vorgegangen werden, indem die Durchflußwandung für den Austritt von Teerdämpfen freigehalten, ansonsten aber eine Borattränkung als Entkohlungsschutz vorgesehen wird.

Die beschriebene Partialtränkung eignet sich besonders für Formkörper zum Vergießen von aggressiver Stahlschmelze. Dagegen kann beispielsweise bei vorwiegend in Luftatmosphäre chemisch beanspruchten kohlenstoffhaltigen Formkörpern zweckmäßig eine vollflächige Borattränkung Anwendung finden.

Als Lacke für die von der Borattränkung auszusparenden Formkörperstellen dienen vorteilhaft Bootslacke, die sich dünn auftragen lassen, und beim Eindringen in die oberen Schichten des Formkörpers die Poren verschließen.

**Ansprüche**

1. Feuerfeste kohlenstoffhaltige Formkörper, die in Luftatmosphäre thermochemischen Angriffen ausgesetzt sind, insbesondere Verschleißkörper, wie Platten und Hülsen für Schieberverschlüsse an metallurgischen Gefäßen,
dadurch gekennzeichnet,
daß eine die Poren gegen Entkohlung abdichtende , durch Tränkung des Formkörpers (1 bzw. 2) in einem Tränkungsmittel auf Borbasis erzeugte Schutzschicht (7 bzw. 8) vorgesehen ist.

2. Formkörper nach Anspruch 1,
dadurch gekennzeichnet,
daß das Tränkungsmittel aus einer wässrigen Boratlösung besteht.

3. Formkörper nach Anspruch 1 oder 2,
dadurch gekennzeichnet,
daß dessen im Betrieb mit Metallschmelze in Berührung kommenden Oberflächenstellen (3a bzw. 4a und 5a bzw. 6a) mit einem das Tränkungsmittel abweisenden, bei Betriebstemperatur sich auflösenden Lackfilm versehen ist.

4. Formkörper nach Anspruch 3,
dadurch gekennzeichnet,
daß der Lackfilm aus dünnflüssigem Bootslack besteht.